# FASCICULE DE BREVET EUROPEEN

(11) **EP 1 669 629 B1**
(45) Date de publication et mention de la délivrance du brevet: **25.06.2008**
(21) Numéro de dépôt: 05301006.2
(22) Date de dépôt: 06.12.2005
(51) Int. Cl.: F16D 65/14, F16L 3/12, F16B 2/06

(54) **Maintien de cable de frein**
Bremsseilhalterung
Support for brake cable

(30) Priorité: 13.12.2004 FR 0452942
(43) Date de publication de la demande: 14.06.2006
(73) Titulaire: RENAULT S.A.S., 92100 Boulogne Billancourt (FR)
(72) Inventeur: Delpuech, Patrick, F-78470 St. Remy les Chevreuses (FR); Jain, Gilbert, F-28130 Maintenon (FR)

(56) Documents cités:
- EP-A- 1 291 564
- DE-A1- 3 832 399
- FR-A- 508 587
- FR-A- 2 841 619

## Description

### DOMAINE TECHNIQUE

L'invention se rapporte à l'agencement des éléments fonctionnels allongés et flexibles, de type fils, en particulier dans le domaine automobile. Plus précisément, l'invention concerne la mise en place et le maintien de câbles, notamment de câbles de frein, dans le châssis d'un véhicule.

### ÉTAT DE LA TECHNIQUE ANTÉRIEURE

Lors du stationnement d'un véhicule automobile, on utilise classiquement un frein de parcage, aussi connu sous le nom de « frein à main » : en simplifiant, des câbles sont solidarisés, de manière fonctionnelle, à une extrémité à un levier actionné manuellement, par exemple par l'intermédiaire d'un palonnier, et à une autre extrémité à des tambours ou disques de frein équipant les roues arrière ou avant du véhicule. La tension, ou traction, appliquée aux câbles lors de l'actionnement du levier se reporte ainsi sur le système de freinage au niveau des roues.

Pour le stationnement a par ailleurs été développé le « frein de parking assisté » (FPA), qui supprime la nécessité du levier de manoeuvre, et même de l'actionnement mécanique : un système embarqué, intégré à l'électronique du véhicule, comprenant calculateurs et capteurs, serre ou relâche automatiquement les freins arrière en fonction de paramètres de conduite. Un tel système comprend, de façon simplifiée, un boîtier de FPA monté sous le véhicule et muni de chaque côté de câbles de frein qui sont montés sur les étriers associés à chaque roue arrière.

Pour un frein de parcage, assisté comme à main, les câbles s'étendent donc transversalement sous le châssis du véhicule d'une position quasiment centrale vers les roues. Or de nombreux autres organes fonctionnels sont également présents dans la structure arrière du châssis, par exemple les amortisseurs, l'échappement du côté gauche, les pipes de remplissage du carburant et tuyaux anti-refoulement du côté droit, sans compter les tuyaux de frein hydraulique, le câblage de système de frein antiblocage (« ABS »),... (la liste n'étant pas exhaustive bien entendu). Que ce soit pour un système FPA ou pour un système classique, la mise en place des câbles n'est donc pas aisée.

Par ailleurs, lors du débattement du train arrière du véhicule, il importe en outre que les câbles ne se prennent pas dans les différents organes fonctionnels. Afin de les maintenir en position, il est connu de faire passer ces câbles dans des gaines, parfois appelées goulottes, de maintien, elles-mêmes solidarisées à l'essieu arrière, qui permettent de contrôler les câbles lors du débattement du train. Les goulottes sont serties autour des câbles afin de former des ensembles unitaires.

Cette solution exige cependant un sertissage peu pratique pour le montage des câbles. De plus, lors de l'entretien du véhicule, la réparation d'un câble défectueux nécessite de remplacer tant le câble que sa gaine, ce qui pose, outre le coût, de nouveau le problème du montage. On a également pu noter que l'agencement serti ne laisse pas de jeu au câble dans la goulotte, ce qui peut entraîner des contraintes préjudiciables sur le câble lors du débattement du train arrière.

Une goulotte de câble de frein est connue du document FR-A-2 841 619.

### EXPOSÉ DE L'INVENTION

L'invention se propose de pallier les inconvénients mentionnés et de permettre une mise en place et un maintien des câbles de frein de parcage.

Plus généralement, l'invention concerne un élément de maintien, qui peut être solidarisé à un châssis par exemple, afin de mettre en place et maintenir un élément allongé et flexible.

Sous l'un de ses aspects, l'invention comme défini dans la revendication 1 concerne un élément de maintien, ou goulotte, sous forme de gouttière. Cette gouttière comprend un ruban de largeur constante s'étendant le long d'un axe, et duquel dépasse au moins une ailette.

La gouttière forme une paroi extraite d'une enveloppe tubulaire cylindrique de révolution dont l'axe est courbe et non plan. En coupe radiale, la gouttière fait moins d'un demi-cercle au niveau du ruban, et plus d'un demi-cercle au niveau des ailettes.

L'axe du ruban est différent de l'axe de l'enveloppe, de sorte que le ruban est plus long que l'enveloppe, chacune de ces dimensions étant prise le long de son axe respectif. Le ruban s'enroule de façon hélicoïdale autour de l'axe de l'enveloppe en faisant au moins un demi-tour. Ainsi, le maintien est assuré quelle que soit la position de l'élément, en particulier lorsqu'il est placé sous un châssis de véhicule.

L'élément de maintien selon l'invention est particulièrement adapté pour les câbles de frein de parcage, et notamment les câbles associés à un frein de parking assisté. L'invention sous un autre aspect concerne ainsi un véhicule automobile comprenant un système de maintien, éventuellement muni de câbles, destiné à un système de frein de parking, de préférence associé à un boîtier de FPA.

L'élément de maintien est de préférence fabriqué de façon unitaire à partir d'une tôle en acier, ou en aluminium, ou en plastique injecté, d'épaisseur comprise entre 0,5 et 2,5 mm ; sa longueur le long de son axe peut faire entre 80 mm et 250 mm pour un diamètre de l'ordre de 10 à 30 mm.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.

La figure 1 représente schématiquement le passage d'un câble de FPA à gauche dans un châssis vu de dessus.

Les figures 2A et 2B représentent deux vues selon des orientations différentes d'un élément de maintien selon l'invention.

Les figures 3A et 3B schématisent à titre explicatif un élément de maintien.

### EXPOSÉ DÉTAILLÉ DE MODES DE RÉALISATION PARTICULIERS

Bien que décrit ci-dessous en relation avec un câble de frein de parking assisté pour un véhicule léger, l'élément de maintien selon l'invention s'applique à d'autres câbles qui doivent être positionnés de façon fiable tout en étant facilement accessibles. En particulier, les formes, dimensions et matériaux sont donnés à titre indicatif. Par ailleurs, le terme « câble » ne doit pas être interprété limitativement comme « ensemble de fils d'acier », mais regroupe tous les objets composés d'un ou plusieurs fils ou autres éléments longitudinaux, revêtus ou non, solidarisés entre eux ou non ; par exemple, l'élément de maintien selon l'invention peut être utilisé pour un câble de frein et un conducteur électrique indépendants l'un de l'autre mais empruntant temporairement le même chemin.

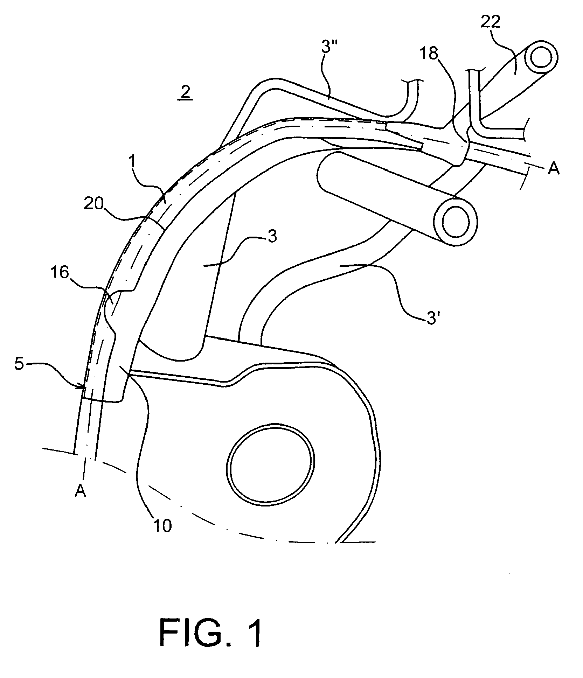

Tel que représenté schématiquement sur la figure 1, un câble 1 d'un FPA est disposé sous un châssis 2 de véhicule selon un parcours sinueux, habituellement en trois dimensions, et entre de nombreux organes fonctionnels 3, 3', 3''. Le câble 1 peut être considéré comme un cylindre de révolution dont l'axe AA est courbe et, en particulier, ne se situe pas dans un plan.

Afin d'assurer sa fonction, le câble doit être mis en place de façon relativement précise, notamment en ce qui concerne sa tension. Par ailleurs, le câble 1 est soumis à des vibrations inhérentes au fonctionnement du véhicule et à des contraintes, en particulier au cours des différentes manoeuvres, par exemple des roues et frein. Malgré ces sollicitations, le câble de frein 1 ne peut pas bouger de façon libre, et ne doit pas être pris par un quelconque organe fonctionnel 3 susceptible de l'endommager.

Habituellement, le câble 1 est maintenu dans une gaine qui lui est sertie : la gaine est sous la forme d'une enveloppe tubulaire 5 cylindrique de révolution, de même axe AA courbe que le câble 1.

Pour permettre un montage et un démontage plus aisés du câble 1, selon l'invention, un élément de maintien 10 extrait de cette enveloppe 5 est utilisé : tel qu'on le voit sur la figure 1, l'élément de maintien 10 laisse le câble 1 accessible et relativement libre tout en lui conservant sa position.

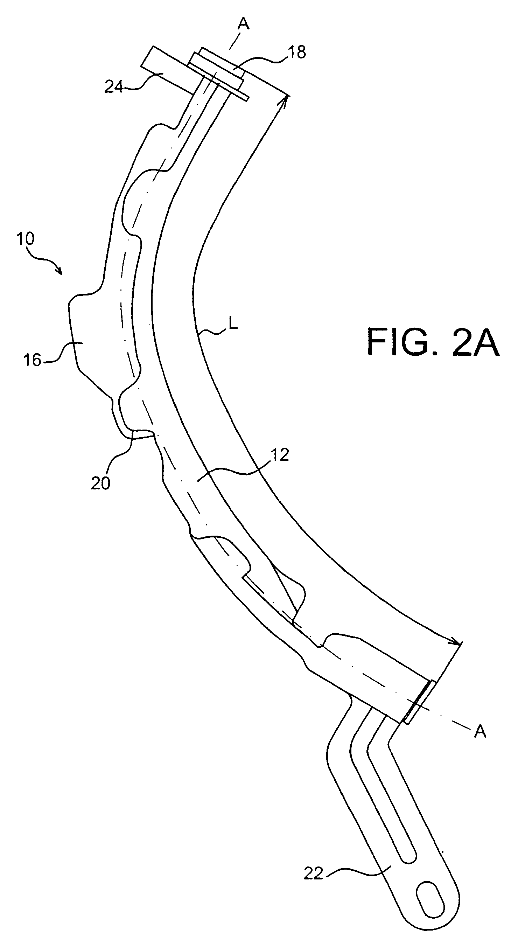

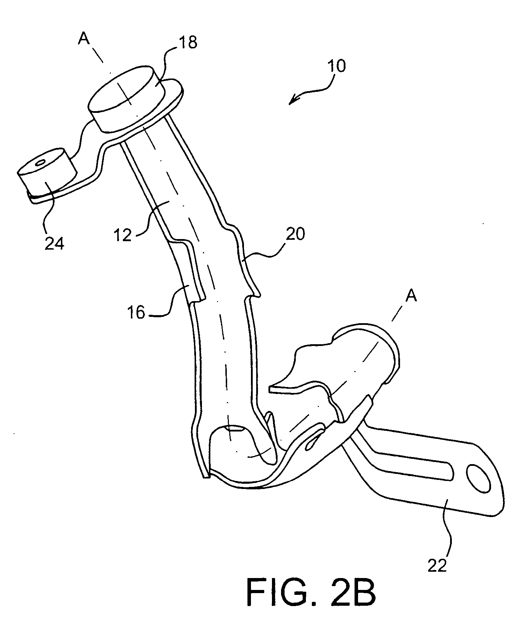

Un élément de maintien 10 selon l'invention peut être visualisé plus particulièrement dans les figures 2A et 2B qui représentent le même élément de maintien 10 selon deux angles différents. L'élément de maintien 10 s'étend le long de l'axe principal AA, qui est la direction prise par le câble 1 dans sa configuration finale sur le châssis 2, sur une longueur L d'une première à une deuxième extrémité.

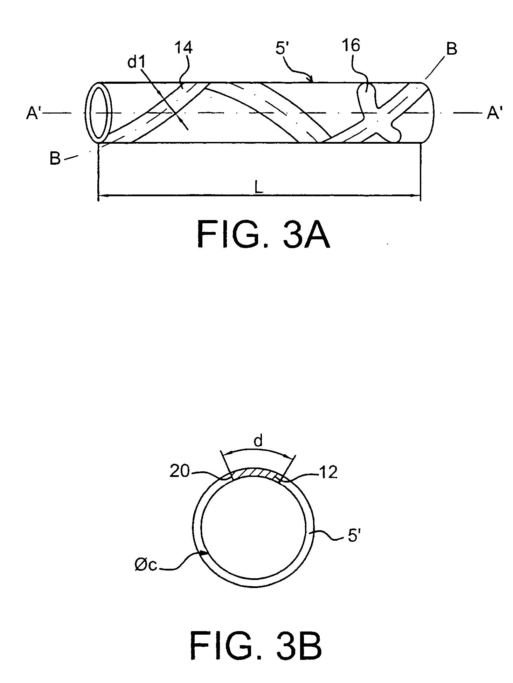

L'élément de maintien 10 comprend de façon générale une paroi 12 en forme de gouttière. En coupe radiale perpendiculairement à l'axe AA, la paroi 12 est sous la forme d'un segment d'anneau, dont le diamètre intérieur c (voir figure 3B) est légèrement supérieur à celui du câble, qui est de l'ordre de 10 à 30 mm pour un câble 1 de FPA.

L'élément de maintien 10 peut être fabriqué à partir du tube 5 rectiligne, par exemple un tube en tôle d'acier ou d'aluminium ou en plastique injecté de longueur L comprise entre 80 et 350 mm, et d'épaisseur comprise entre 0,5 mm et 2,5 mm, de préférence 1,5 mm, représentant l'épaisseur de la paroi 12. L'enveloppe 5 est ensuite cintrée de façon à obtenir sa forme finale, avec l'axe AA courbe. Les découpes peuvent être réalisées par un outillage de découpe ou directement par moulage, avant ou après cintrage.

En particulier, et afin de simplifier la description, un tel élément 10' avant vrillage et cambrage est représenté sur les figures 3.

Il doit cependant être entendu que le procédé décrit ci-dessus n'est qu'indicatif, et que la description s'applique pareillement à un élément de maintien 10 de forme complexe tel que présenté dans les figures 1 et 2 qui serait fabriqué sans produit intermédiaire « plan ». En effet, lorsque l'axe AA d'un élément de maintien 10 est « redressé », même virtuellement, en axe droit A'A', l'enveloppe 5' du câble est alors un tube cylindrique de révolution classique, de section circulaire interne de diamètre c. Par ailleurs, une simplification supplémentaire est présentée dans les figures 3, tel qu'il apparaît clairement sur la découpe extérieure de la paroi de l'élément tubulaire 10.

En effet, la dimension de la paroi 12 selon sa périphérie, c'est-à-dire la longueur d'arc d du segment d'anneau varie au long de l'axe AA. On peut définir cependant une partie 14 sous forme de ruban de dimension circonférentielle d1 constante sur toute la longueur de l'élément 10. Le segment d'arc défini par le ruban 14 est inférieur à un demi-cercle.

Par ailleurs, le ruban 14 s'étire le long d'un deuxième axe BB. Selon l'invention, le ruban 14 s'enroule de façon de préférence hélicoïdale autour de l'axe principal AA de l'enveloppe 5 (respectivement l'axe A'A' de l'enveloppe 5', tel que schématisé sur la figure 3A). En particulier, la longueur du ruban 14 le long de son axe BB est supérieure à la longueur L de l'élément 10 le long de son axe AA.

Bien que l'enroulement hélicoïdal soit préféré, il est clair que ceci n'est pas limitatif. En particulier, l'enroulement peut ne pas être à pas constant. De plus, il n'est pas nécessaire que le ruban 14 fasse plusieurs spires autour de l'axe principal AA, ni même une seule : avantageusement, l'axe secondaire BB fait un demi-tour environ au moins autour de l'axe principal AA.

Par ailleurs, afin de maintenir le câble en position, au moins une ailette de maintien 16 est prévue. La paroi 12 au niveau des ailettes 16 « dépasse » du ruban 14. En particulier, les ailettes 16 sont telles que, en coupe radiale, elles ont une forme d'arc qui fait plus d'un demi-cercle, c'est-à-dire qu'un câble 1 adapté au diamètre c de l'enveloppe 5, une fois localisé dans l'élément de maintien 10 au niveau de l'ailette 16, y reste coincé à moins d'être sollicité vers l'extérieur, par exemple par traction manuelle.

Le nombre d'ailettes 16 dépend de la géométrie générale de l'élément de maintien 10, c'est-à-dire de sa longueur et de l'orientation de l'axe AA principalement ; avantageusement, de deux à quatre, voire dix, ailettes 16 sont disposées, de façon régulière ou non, le long de l'axe BB du ruban 14. Il est possible qu'une ailette forme de fait un cercle et soit « fermée » : le câble 1 est, lors de sa mise en place, passé par l'orifice de l'anneau 18 ainsi créé. Cette forme de réalisation peut être préférée pour assurer un maintien sûr à cet endroit. Avantageusement, un tel anneau 18 se localise au niveau d'une extrémité de l'élément de maintien 10.

Bien que décrit ci-dessus et schématisé en figure 3A comme un ruban 14 comprenant des protubérances sous forme d'ailettes 16, il est clair, comme on le voit d'ailleurs dans les figures 2, que la paroi 12, si elle est mise à plat, n'a pas nécessairement la forme d'une échelle. De fait, entre deux ailettes 16, le bord libre 20 de la paroi 12 peut avoir une forme quelconque, le ruban 14 ne constituant qu'une partie de cette dernière. En particulier, la découpe externe du bord 20 de la paroi 12 ne présente avantageusement pas d'angle vif et est adaptée à la configuration du châssis 2 où l'élément 10 sera solidarisé. Cependant, il est avantageux qu'à l'exception des ailettes 16, la dimension circonférentielle d de la paroi 12 soit de l'ordre de d1 ou, tout au moins, que le segment d'anneau défini par la paroi 12 soit inférieur à un demi-cercle sur au moins la moitié, de préférence les trois quarts, de la longueur L de l'élément 10.

De façon préférée, la paroi 12 de l'élément de maintien 10 est fabriquée de façon unitaire, c'est-à-dire que le ruban 14 et les ailettes 16, ainsi que les parties menant du ruban 14 jusqu'au bord 20, sont issus d'une même tôle, de préférence en acier ou en aluminium, ou d'un même plastique injecté. L'épaisseur de l'élément de maintien 10 est ainsi avantageusement constante, à l'exception des éventuels finissages de bord 20 permettant d'éviter les angles coupants. Cependant, il est possible aussi par exemple de rapporter des ailettes 16 sur une bande métallique 14 enroulée hélicoïdalement autour d'un axe courbe AA (par exemple selon un pas de 200 mm).

De préférence, l'élément de maintien 10 comprend au moins à une extrémité, avantageusement à chacune, des moyens de connexion 22, 24. Tel que schématisé, les moyens de connexion peuvent être sous la forme d'une patte 22 percée qui peut être solidarisée par vissage ou rivetage au châssis 2 du véhicule, et qui peut être unitaire avec la paroi 12. Un moyen de connexion peut aussi comprendre une bague 24, par exemple rapportée sur la paroi 12, de préférence au niveau d'un anneau 18. Le choix des moyens de connexion 22, 24 dépend de l'emplacement de cette fixation dans le châssis 2, en particulier de sa taille et de son accessibilité.

L'élément de maintien 10 selon l'invention ne nécessite ainsi aucun sertissage des câbles 1, et permet un montage et un démontage aisés. Le remplacement du câble 1 à l'intérieur de l'élément 10 peut en outre être effectué autant de fois que nécessaire, le maintien restant efficace. En particulier, lorsqu'il est positionné sous un châssis, l'élément de maintien présente des montants verticaux alternativement disposés en avant et en arrière du câble, et des montants horizontaux alternativement disposés au dessus et en dessous du câble. Ceci permet d'assurer la position du câble dans l'élément de maintien, même en présence de vibrations.

De plus, le maintien du câble est relativement lâche, c'est-à-dire qu'il subsiste un jeu entre le câble et l'élément de maintien afin de diminuer les contraintes sur le câble et de permettre un meilleur transfert de la tension au frein.

En outre, classiquement, le chemin emprunté par le câble de frein 1 dans le châssis présente une concavité, qui est reprise dans l'élément de maintien 10. De préférence, la paroi 12 est ouverte vers l'extérieur au niveau de cette concavité, c'est-à-dire que l'enroulement du ruban 14 autour de l'axe principal AA est tel que le ruban 14 se trouve à l'intérieur de la concavité ; il est préférable également qu'aucune ailette 16 ne soit positionnée au niveau de la concavité. Ceci permet un plus grand mouvement du câble 1 qui peut sortir légèrement entre les bords 20 de l'élément de maintien 10, en particulier lors du débattement du train arrière, afin de minimiser encore les contraintes exercées par l'élément de maintien sur le câble.

## Revendications

1. Elément de maintien (10) d'un câble (1) de frein dans un véhicule automobile comprenant une paroi (12) extraite d'une enveloppe tubulaire (5) cylindrique de révolution qui est définie par un premier cercle et s'étendant longitudinalement le long d'un premier axe (AA), dans lequel :
- le premier axe (AA) de l'enveloppe (5) définit une ligne courbe non plane ;
- la paroi (12) comprend au moins une ailette (16) telle que la longueur d'arc (d) de la paroi de l'élément de maintien (10) au niveau de l'ailette (16) soit supérieure ou égale à la moitié de la circonférence du premier cercle ;
- la paroi (12) comprend une partie en forme de ruban (14) s'étendant longitudinalement selon un deuxième axe (BB) et dont la longueur d'arc (d1) est constante sur sa longueur prise le long du deuxième axe (BB), le ruban (14) s'enroulant de façon helicoïdale autour du premier axe (AA), en faisant au moins un demi-tour.
- la longueur de la paroi (12) le long du deuxième axe (BB) est supérieure à la longueur (L) de l'élément de maintien (10) le long du premier axe (AA).

2. Elément de maintien selon la revendication 1, dans lequel le câble (1) maintenu dans l'élément de maintien (10) est un câble de frein de parking.

3. Elément selon l'une des revendications 1 ou 2 dans lequel le deuxième axe (BB) est enroulé hélicoïdalement autour du premier axe (AA).

4. Elément selon l'une des revendications 1 à 3 dans lequel le diamètre intérieur (c) du cercle est compris entre 10 mm et 30 mm et/ou la première longueur (L) est comprise entre 80 et 350 mm.

5. Elément selon l'une des revendications 1 à 4 comprenant en outre des moyens de fixation (22, 24) à au moins une extrémité.

6. Elément de maintien selon l'une des revendications 1 à 5 tel qu'il est fabriqué de façon unitaire.

7. Elément de maintien selon l'une des revendications 1 à 6 dans lequel la paroi (12) est fabriquée en tôle d'acier d'épaisseur comprise entre 0,5 et 2,5 mm.

8. Elément selon l'une des revendications 1 à 7 comprenant de 2 à 10 ailettes (16).

9. Véhicule automobile comprenant au moins un élément de maintien (10) selon l'une des revendications 1 à 8 et un frein de parking dont les câbles d'actionnement (1) sont destinés à être maintenus dans l'élément de maintien (10).

10. Véhicule automobile selon la revendication 9 dans lequel le frein de parking comprend un boîtier de frein de parking assisté.

11. Véhicule automobile selon l'une des revendications 9 à 10 comprenant un câble de frein (1) dans l'élément de maintien (10).

## Claims

1. Support element (10) for supporting a brake cable (1) in a motor vehicle, comprising a wall (12) extracted from a tubular envelope (5) that is a cylinder of revolution and is defined by a first circle extending longitudinally along a first axis (AA) in which:
- the first axis (AA) of the envelope (5) defines a non-planar curved line;
- the wall (12) comprises at least one fin (16) such that the arc length (d) of the wall of the support element (10) at the fin (16) is greater than or equal to half the circumference of the first circle;
- the wall (12) comprises a tape-like part (14) extending longitudinally along a second axis (BB) and of which the arc length (d1) is constant over the length measured along the second axis (BB), the tape (14) being wound in a helix about the first axis (AA) over at least half a turn;
- the length of the wall (12) along the second axis (BB) is greater than the length (L) of the support element (10) along the first axis (AA).

2. Support element according to Claim 1, in which the cable (1) supported in the support element (10) is a parking brake cable.

3. Element according to one of Claims 1 or 2, in which the second axis (BB) is wound in a helix about the first axis (AA).

4. Element according to one of Claims 1 to 3, in which the inside diameter (C) of the circle ranges between 10 mm and 30 mm and/or the first length (L) ranges between 80 and 350 mm.

5. Element according to one of Claims 1 to 4, further comprising attachment means (22, 24) at least at one end.

6. Support element according to one of Claims 1 to 5, such that it is manufactured as a single piece.

7. Support element according to one of Claims 1 to 6 in which the wall (12) is made of sheet steel between 0.5 and 2.5 mm thick.

8. Element according to one of Claims 1 to 7 comprising 2 to 10 fins (16).

9. Motor vehicle comprising at least one support element (10) according to one of Claims 1 to 8 and a parking brake the actuating cables (1) of which are intended to be supported in the support element (10).

10. Motor vehicle according to Claim 9 in which the parking brake comprises a power-assisted parking brake unit.

11. Motor vehicle according to one of Claims 9 to 10 comprising a brake cable (1) in the support element (10).

## Patentansprüche

1. Halterungselement (10) für ein Bremsseil (1) in einem Kraftfahrzeug, das eine Wand (12) aufweist, die aus einer zylindrischen drehsymmetrischen Hülle (5) gewonnen wird, die von einem ersten Kreis definiert wird und sich in Längsrichtung entlang einer ersten Achse (AA) erstreckt, bei dem
- die erste Achse (AA) der Hülle (5) eine gekrümmte, unebene Linie definiert;
- die Wand (12) mindestens eine derartige Rippe (16) aufweist, dass die Bogenlänge (d) der Wand des Halterungselements (10) in Höhe der Rippe (16) größer als die oder gleich der Hälfte des Umfangs des ersten Kreises ist;
- die Wand (12) einen Bereich in Form eines Bands (14) aufweist, das sich in Längsrichtung gemäß einer zweiten Achse (BB) erstreckt und dessen Bogenlänge (d1) über seine Länge konstant ist, die entlang der zweiten Achse (BB) genommen wird, wobei das Band (14) sich schraubenförmig um die erste Achse (AA) wickelt, indem es mindestens eine Kehrtwende macht,
- die Länge der Wand (12) entlang der zweiten Achse (BB) größer ist als die Länge (L) des Halterungselements (10) entlang der ersten Achse (AA).

2. Halterungselement nach Anspruch 1, bei dem das im Halterungselement (10) gehaltene Seil (1) ein Seil einer Parkbremse ist.

3. Element nach einem der Ansprüche 1 oder 2, bei dem die zweite Achse (BB) schraubenförmig um die erste Achse (AA) gewickelt ist.

4. Element nach einem der Ansprüche 1 bis 3, bei dem der Innendurchmesser (c) des Kreises zwischen 10 mm und 30 mm und/oder die erste Länge (L) zwischen 80 und 350 mm liegt.

5. Element nach einem der Ansprüche 1 bis 4, das außerdem Befestigungsmittel (22, 24) an mindestens einem Ende aufweist.

6. Halterungselement nach einem der Ansprüche 1 bis 5, derart, dass es einstückig hergestellt ist.

7. Halterungselement nach einem der Ansprüche 1 bis 6, bei dem die Wand (12) aus Stahlblech einer Stärke hergestellt wird, die zwischen 0,5 und 2,5 mm liegt.

8. Element nach einem der Ansprüche 1 bis 7, das 2 bis 10 Rippen (16) aufweist.

9. Kraftfahrzeug, das mindestens ein Halterungselement (10) nach einem der Ansprüche 1 bis 8 und eine Parkbremse aufweist, deren Betätigungsseile (1) dazu bestimmt sind, im Halterungselement (10) gehalten zu werden.

10. Kraftfahrzeug nach Anspruch 9, bei dem die Parkbremse ein Servoparkbremse-Gehäuse aufweist.

11. Kraftfahrzeug nach einem der Ansprüche 9 bis 10, das ein Bremsseil (1) im Halterungselement (10) aufweist.
